# EUROPÄISCHE PATENTSCHRIFT

(11) **EP 2 152 544 B1**
(45) Veröffentlichungstag und Bekanntmachung des Hinweises auf die Patenterteilung: **10.11.2010**
(21) Anmeldenummer: 08735719.0
(22) Anmeldetag: 03.04.2008
(51) Int. Cl.: B60Q 3/02, B61D 37/00

(54) **BELEUCHTUNGSVORRICHTUNG FÜR DIE BELEUCHTUNG VON FAHRZEUGINNENRÄUMEN**
ILLUMINATION DEVICE FOR ILLUMINATING THE INSIDE OF A VEHICLE
DISPOSITIF D'ÉCLAIRAGE CONÇU POUR ÉCLAIRER L'ESPACE INTÉRIEUR D'UN VÉHICULE

(30) Priorität: 27.04.2007 DE 102007020398
(43) Veröffentlichungstag der Anmeldung: 17.02.2010
(73) Patentinhaber: Bombardier Transportation GmbH, 10785 Berlin (DE); SBF Spezialleuchten Wurzen, 04808 Wurzen (DE)
(72) Erfinder: WEISE, Gerd, 02829 Markersdorf, Ot Pfaffendorf (DE); TIRSCHLER, Bernd, 02828 Görlitz (DE); CZEKAY, Dietmar, 04109 Leipzig (DE); GEISSLER, Friedemann, 04828 Bennewitz (DE); KALBE, Dirk, 04435 Schkeuditz, Ot Glesien (DE); PENNDORF, Hans, Joachim, 02877 Görlitz (DE)
(74) Vertreter: Cohausz & Florack
(86) Internationale Anmeldenummer: PCT/EP2008/053970
(87) Internationale Veröffentlichungsnummer: WO 2008/132010

(56) Entgegenhaltungen:
- EP-A- 1 154 199
- EP-A- 1 704 993
- DE-A1- 10 313 068
- JP-A- 2005 324 694

## Beschreibung

Die vorliegende Erfindung betrifft eine Gepäckablage mit einer Beleuchtungsvorrichtung für die Beleuchtung von Fahrzeuginnenräumen, insbesondere Fahrgastabteilen, gemäß den unabhängigen Anspruch 1.

Eine Beleuchtungsvorrichtung der zuvor beschriebenen Art ist beispielsweise aus der JP 2005324694 A bekannt. Die Beleuchtungsvorrichtung ist ein Bestandteil einer Gepäckablage ohne tragende Funktion, der zur Beleuchtung eines Fahrgastabteils, hier eines Zugabteils, dient. Die Beleuchtungsvorrichtung weist zwei in einem gewissen Abstand parallel zueinander angeordnete Glasscheiben und eine streifenförmig ausgebildete Lichtquelle mit mehreren Leuchtdioden (LEDs) auf. Die LEDs sind so angeordnet, dass sie das Licht in den Zwischenraum zwischen die beiden Scheiben emittieren. Die obere der beiden Scheiben, also die von der zu beleuchtenden Stelle abgewandte Scheibe, ist so ausgebildet, dass das auf die Scheibe auftreffende Licht reflektiert und gestreut wird. Die untere der beiden Scheiben ist so ausgebildet, dass sie das von der oberen Scheibe reflektierte und gestreute Licht zu der zu beleuchtenden Stelle hindurch lässt. Mit anderen Worten, die obere Scheibe ist diffus und die untere Scheibe klar ausgebildet. Nachteilig an dieser Beleuchtungsvorrichtung ist jedoch der relativ aufwendige Aufbau, der zu entsprechend hohen Herstellungskosten führt.

Aus der JP 2006103631 A ist ferner eine Beleuchtungsvorrichtung für die Beleuchtung von Fahrzeuginnenräumen bekannt, bei der eine streifenförmige Lichtquelle zwei Reihen von LEDs aufweist, die die zu beleuchtende Stelle direkt anstrahlen. Um einen möglichst großen Bereich anstrahlen zu können, sind die LEDs der einen Reihe winkelig zu den LEDs der anderen Reihe angeordnet. Die direkte Beleuchtung hat jedoch den Nachteil, dass der Fahrgast geblendet wird. Im übrigen ist auch diese Beleuchtungsvorrichtung aufgrund der Vielzahl verschiedener LEDs sehr aufwendig in der Herstellung.

Es ist daher die Aufgabe der vorliegenden Erfindung, eine Gepäckablage mit einer Beleuchtungsvorrichtung für die Beleuchtung von Fahrzeuginnenräumen zu schaffen, die mit möglichst einfachen Mitteln eine optimale Ausleuchtung garantiert.

Die zuvor hergeleitete und aufgezeigte Aufgabe wird gemäß einer ersten Lehre der vorliegenden Erfindung bei einer Gepäckablage mit einer Beleuchtungsvorrichtung der eingangs genannten Art durch die Merkmale des kennzeichens des unabhängigen Anspruchs 1 gelöst..

Eine solche Gepäckablage mit einer Beleuchtüngsvorrichtung führt zu einer optimalen, insbesondere blendfreien, Ausleuchtung des Fahrzeuginnenraums, beispielsweise von Fahrgastabteilen in Schienenfahrzeugen, Flugzeugen oder Bussen. Gleichzeitig wird aufgrund der Verwendung einer einzigen Scheibe der Aufbau der Beleuchtungsvorrichtung deutlich vereinfacht. Vorteilhaft ist ferner, dass das in die Scheibe eingeleitete Licht, da es über die erste Stirnkante eingeleitet wird, sowohl auf der Oberseite als auch auf der Unterseite austreten kann und damit den Fahrzeuginnenraum zu beiden Seiten der Scheibe hin ausleuchten kann.

Auf diese Weise wird mit einfochen Mitteln ermöglicht, sowohl den Bereich unter der Gepäckablage, insbesondere den Sitzplatz des Fahrgastes, als auch den Bereich oberhalb der Gepäckablage zu beleuchten.

Gemäß einer ersten Ausgestaltung der erfindungsgemäßen Gepackablage mit einer Beleuchtungsvorrichtung ist die Lichtquelle unmittelbar auf die erste Stirnkante gerichtet. Auf diese Weise wird der Aufbau der Beleuchtungsvorrichtung besonders vereinfacht. Konstruktionsbedingt kann allerdings auch ein das emittierte Licht umlenkendes Bauteil, beispielsweise ein Reflektor, ein Diffuser oder dergleichen, vorgesehen sein.

Gemäß einer weiteren Ausgestaltung der erfindungsgemäßen Gepäckablage mit einer Beleuchtungsvorrichtung ist die Lichtquelle streifenförmig ausgebildet und parallel zur ersten Stirnkante angeordnet. Eine streifenförmige Ausbildung hat den Vorteil, dass das Licht auf optimale weise über die erste Stirnkante ins Innere der Scheibe eingeleitet werden kann. Dabei weist die Lichtquelle vorzugsweise eine oder mehrere LEDs auf. Die LEDs können in einer Reihe entlang der ersten Stirnkante angeordnet sein, um auf optimale Weise die Stirnkante anzustrahlen.

Gemäß noch einer weiteren Ausgestaltung der erfindungsgemäßen Gepäckablage mit einer Beleuchtungsvorrichtung ist die Lichtquelle derart ausgebildet, dass sie farbiges Licht emittiert. Auf diese Weise können beispielsweise unterschiedliche Bereiche eines Fahrzeuginnenraums, beispielsweise die erste Klasse und die zweite Klasse eines Zugabteils, in unterschiedlichen Farben ausgeleuchtet oder gekennzeichnet werden. Es ist auch denkbar, dass die Lichtquelle derart ausgebildet ist, dass sie Licht verschiedener Farben emittieren kann. Auf diese Weise können im Bedarfsfall mit ein und derselben Beleuchtungsvorrichtung unterschiedliche Lichteffekte, insbesondere unterschiedliche Farben, erzielt werden.

Gemäß einer anderen Ausgestaltung der erfindungsgemäßen Gepäckablage mit einer Beleuchtungsvorrichtung ist die oberseitige Oberfläche und/oder die unterseitige Oberfläche der Scheibe zumindest teilweise mit einer Strukturierung versehen. Die Strukturierung kann von einem oder mehreren Abschnitten gebildet werden. Dabei ist es denkbar, dass einer oder mehrere Abschnitte angeraut, insbesondere geschliffen oder gesandstrahlt und/oder beschichtet sind, beispielsweise mit einer Lackschicht oder einer Folie, die vorzugsweise transparent ist. Eine solche Strukturierung führt dazu, dass das ins Innere der Scheibe eingeleitete Licht am Übergang zwischen der Glasscheibe und der Umgebungsluft nicht mehr, oder zumindest in geringerem Maße, reflektiert wird. Statt einer Reflektion führen die die Strukturierung bildenden Abschnitte dazu, dass das Licht an diesen Stellen zumindest teilweise austritt.

Gemäß einer weiteren Ausgestaltung der erfindungsgemäßen Gepäckablage mit einer Beleuchtungsvorrichtung sind die die Strukturierung bildenden Abschnitte nebeneinander in einer oder mehreren Reihen angeordnet. Auf diese Weise wird erreicht, dass das Licht aus der oberseitigen Oberfläche und/oder der unterseitigen Oberfläche der Scheibe in einem großen, flächigen Bereich austritt. Vorteilhafterweise haben benachbarte Abschnitte jeweils denselben Abstand voneinander, wodurch eine gleichmäßige Beleuchtung erreicht wird. Besonders gleichmäßig wird die Beleuchtung dann, wenn die Abschnitte dieselbe Größe und/oder Form haben. Dadurch wird ferner ein optisch ansprechendes Erscheinungsbild erreicht.

Gemäß noch einer anderen Ausgestaltung der erfindungsgemäßen Gepäckablage mit einer Beleuchtungsvorrichtung ist die Scheibe aus Glas, insbesondere Weißglas, oder Kunststoff gebildet. Vorzugsweise wird Sicherheitsglas verwendet, da auf diese Weise die Beleuchtungsvorrichtung auch problemlos, beispielsweise mit Gepäckstücken oder dergleichen, belastet werden kann.

Gemäß einer weiteren Ausgestaltung der erfindungsgemäßen Gepäckablage mit einer Beleuchtungsvorrichtung weist die Scheibe vier Stirnkanten auf, von denen sich jeweils zwei gegenüberliegen. Konstruktionsbedingt können aber auch andere Scheibenformen und dementsprechend eine andere Anzahl oder Ausrichtung der Stirnkanten zueinander vorgesehen sein. Die einfachste Bauform stellt eine viereckige Scheibe mit jeweils zwei gegenüberliegenden Stirnkanten dar. Es ist auch denkbar, dass der Bereich, in dem zwei benachbarte Stirnkanten aufeinandertreffen, abgerundet ist, so dass die eine Stirnkante gleichmäßig in die andere Stirnkante übergeht.

Gemäß einer weiteren Ausgestaltung der erfindungsgemäßen Gepäckablage mit einer Beleuchtungsvorrichtung ist mindestens eine der Stirnkanten zumindest teilweise poliert. Insbesondere sind alle Stirnkanten zumindest teilweise poliert, was eine besonders kostengünstige Ausführung der Scheibe darstellt. Dabei ist vorzugsweise die erste Stirnkante, durch die das Licht in die Scheibe eingeleitet wird, poliert, da auf diese Weise das Licht besonders effektiv, das heißt ohne nennenswerte Verluste, und ohne Streuung und Reflektion eingeleitet werden kann. Die übrigen Stirnkanten können zumindest teilweise angeraut, vorzugsweise geschliffen oder gesandstrahlt, oder auch beschichtet sein. Im Falle einer Beschichtung weist diese vorzugsweise ein Metallpartikel enthaltendes Material auf. Auf diese Weise kann beispielsweise eine lichtreflektierende Beschichtung geschaffen werden, die ermöglicht, dass das durch die erste, vorzugsweise polierte, Stirnkante eingeleitete Licht an den übrigen Stirnkanten reflektiert wird und damit die Beleuchtungsintensität weiter verstärkt. Die Beschichtung kann ferner eine Folie oder ein Lack sein.

Eine solche Gepäckablage kann in Fahrgastabteilen, beispielsweise in Zugabteilen, auf einfache und platzsparende Weise verwendet werden. Denkbar ist insbesondere auch der Einsatz in doppelstöckigen Fahrzeugen, bei denen aufgrund des geringen Platzbedarfs und der gewünschten angenehmen und blendfreien Ausleuchtung die erfindungsgemäße Beleuchtungsvorrichtung sowohl im Oberstock als auch im Unterstock eingesetzt werden kann.

Insbesondere bei der Verwendung der Scheibe als Bestandteil einer Gepäckablage kann diese von einem Träger gehalten sein. Der Träger kann dabei einen die Scheibe zumindest teilweise einfassenden Rahmen aufweisen. Dieser Rahmen verdeckt vorzugsweise zumindest teilweise die Stirnkanten mit Ausnahme der ersten Stirnkante, durch die das emittierte Licht ins Innere der Scheibe eingeleitet wird.

Es gibt nun eine Vielzahl von Möglichkeiten, die erfindungsgemäße Gepäckablage auszugestalten und weiterzubilden. Hierzu wird einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: ein Ausführungsbeispiel einer Beleuchtungsvorrichtung der Gepäckablage gemäß der vorliegenden Erfindung, und
- Fig. 2: ein Ausführungsbeispiel einer Gepäckablage mit integrierter Beleuchtungsvorrichtung gemäß der vorliegenden Erfindung.

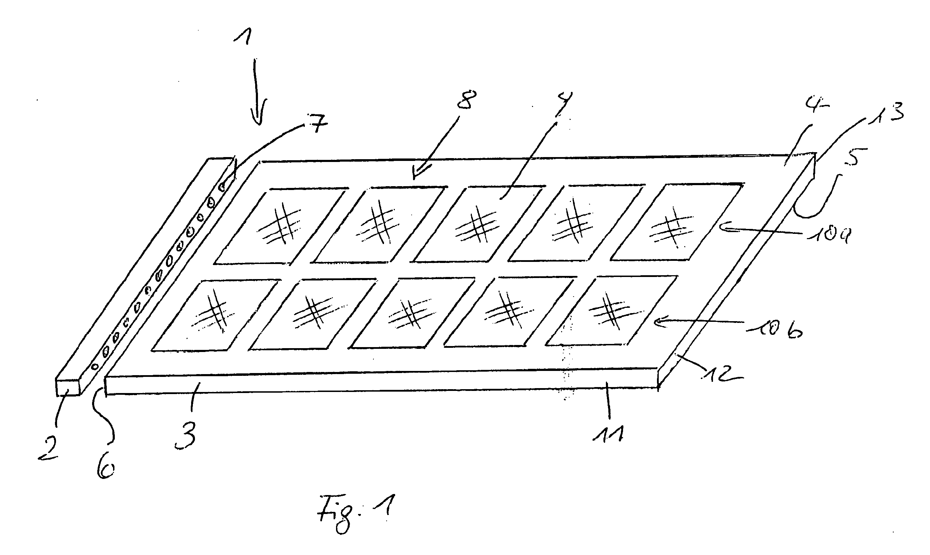

In Fig. 1 ist in einer perspektivischen Ansicht eine Beleuchtungsvorrichtung 1 für die Beleuchtung eines Zugabteils dargestellt. Die Beleuchtungsvorrichtung 1 weist einerseits eine Lichtquelle 2 auf, die Licht emittiert. Die Lichtquelle 2 kann sowohl von einem Fahrgast als auch automatisch, beispielsweise im Rahmen einer Notbeleuchtung, eingeschaltet werden.

Ferner weist die Beleuchtungsvorrichtung 1 eine Scheibe 3 aus weißem Sicherheitsglas auf, wobei die Scheibe 3 eine oberseitige Oberfläche 4, eine unterseitige Oberfläche 5, die parallel zur oberseitigen Oberfläche 4 verläuft, und eine erste Stirnkante 6 aufweist. Die erste Stirnkante 6 ist der Lichtquelle 2, welche eine Vielzahl von in einer Reihe angeordneten Leuchtdioden 7 aufweist, gegenüber angeordnet, so dass das von den LEDs emittierte Licht über die erste Stirnkante 6 unmittelbar in die Scheibe 3 eingeleitet wird.

Darüber hinaus ist vorgesehen, dass das über die erste Stirnkante 6 in die Scheibe 3 eingeleitete Licht an mehreren Stellen über die oberseitige Oberfläche 4 der Scheibe 3 in die Umgebung austritt.

Um dies zu bewirken, ist die oberseitige Oberfläche 4 mit mehreren, eine Strukturierung 8 bildenden Abschnitten 9 versehen, die im selben Abstand voneinander in zwei Reihen 10a und 10b angeordnet sind. Die Abschnitte 9 sind im vorliegenden Fall durch Sandstrahlen erzeugt worden. Durch das Sandstrahlen ist die Oberfläche der Scheibe 3 im Bereich der Abschnitte 9 so ausgebildet, dass das durch die Scheibe 3 geleitete Licht an der Grenzschicht zwischen oberseitiger Oberfläche 4 und Umgebungsluft nicht mehr vollständig reflektiert wird, sondern teilweise austritt. Durch die Abschnitte 9 kann auch eine gewisse Streuung des Lichts erreicht werden, die dazu führt, dass ein Teil des Lichts auch an der unterseitigen Oberfläche 5 austritt.

Ein vergleichbarer Effekt läßt sich auch dadurch erzielen, dass im Bereich der Abschnitte 9 eine Folie oder Lackschicht, die vorzugsweise transparent ist, auf die Scheibe aufgebracht ist.

Darüber hinaus sind beim vorliegenden Ausführungsbeispiel einer Beleuchtungsvorrichtung 1 die Seitenkanten 11, 12 und 13 ebenfalls oberflächenbehandelt, nämlich mit einer spiegelnden, Metallpartikel enthaltenden Beschichtung, die das Licht im Innern der Scheibe reflektiert und dadurch die Intensität der Beleuchtung erhöht.

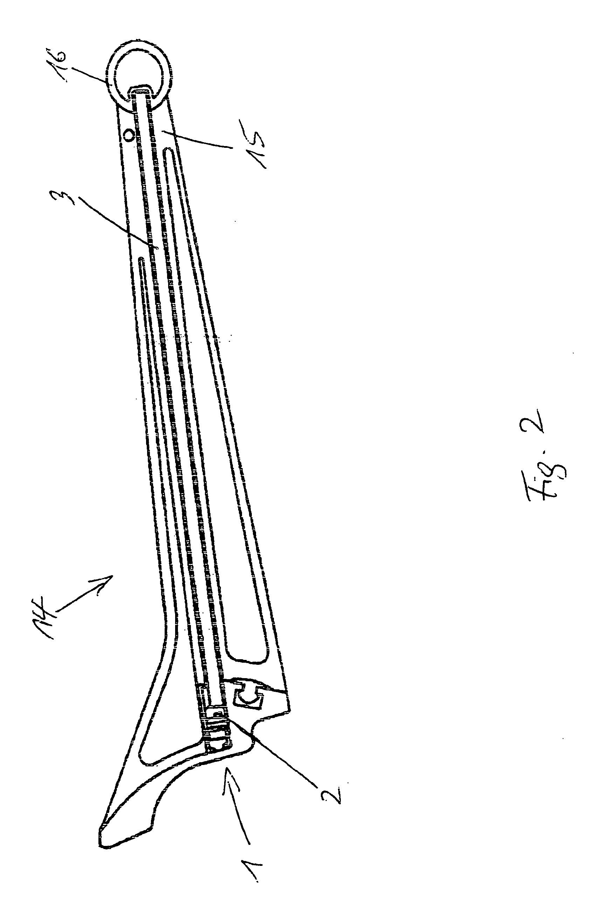

Fig. 2 zeigt ein Ausführungsbeispiel einer Gepäckablage 14 gemäß der vorliegenden Erfindung. In der dargestellten Schnittansicht ist die Scheibe 3, welche zuvor anhand von Fig. 1 im Detail beschrieben wurde, von einem Träger 15 gehalten und an den Stirnkanten 11, 12 und 13 von einem Rahmen 16 eingefasst.

In einen Teil des Rahmens ist auch die Lichtquelle 2, welche ebenfalls anhand von Fig. 1 erläutert wurde, integriert, und zwar derart, dass das von den LEDs emittierte Licht unmittelbar und ohne nennenswerte Streuung auf die erste Stirnkante 6 trifft und auf diese Weise ins Innere in die Scheibe 3 eingeleitet wird.

Bei der dargestellten Gepäckablage 14 dient die Scheibe 3, die aus Sicherheitsglas besteht, als tragendes Bauteil, auf dem Gepäckstücke abgelegt werden können.

## Patentansprüche

1. Gepäckablage (14) mit einer Beleuchtungsvorrichtung (1) für die Beleuchtung von Fahrzeuginnenräumen, insbesondere Fahrgastabteilen,
- mit einer Lichtquelle (2), die Licht emittiert, und
- mit einer Scheibe (3) aus zumindest teilweise transparentem Material, wobei die Scheibe (3) eine oberseitige Oberfläche (4), eine unterseitige Oberfläche (5), die parallel zur oberseitigen Oberfläche (4) verläuft, und mindestens eine erste Stirnkante (6) aufweist,
**dadurch gekennzeichnet, dass** das von der Lichtquelle (2) emittierte Licht über die erste Stirnkante (6) in die Scheibe (3) eingeleitet wird und zumindest teilweise über die oberseitige Oberfläche (4) und/oder die unterseitige Oberfläche (5) der Scheibe (3) austritt und dass die Scheibe (3) ein tragender Bestandteil der Gepäckablage (14) ist, auf dem Gepäckstücke abgelegt werden können.

2. Gepäckablage (14) nach Anspruch 1, **dadurch gekennzeichnet, dass** die Lichtquelle (2) unmittelbar auf die erste Stirnkante (6) gerichtet ist.

3. Gepäckablage (14) nach Anspruch 1 oder 2, **dadurch gekennzeichnet, dass** die Lichtquelle (2) streifenförmig ausgebildet ist und parallel zur ersten Stirnkante (6) angeordnet ist.

4. Gepäckablage (14) nach einem der vorangehenden Ansprüche, **dadurch gekennzeichnet dass** die Lichtquelle (2) eine oder mehrere Leuchtdioden (7) aufweist, die insbesondere in einer Reihe entlang der ersten Stirnkante (6) angeordnet sind.

5. Gepäckablage (14) nach einem der vorangehenden Ansprüche,
**dadurch gekennzeichnet, dass** die Lichtquelle (2) derart ausgebildet ist, dass sie farbiges Licht und/oder Licht verschiedener Farben emittiert.

6. Gepäckablage (14) nach einem der vorangehenden Ansprüche,
**dadurch gekennzeichnet, dass** die oberseitige und/oder unterseitige Oberfläche (5) zumindest teilweise mit einer Strukturierung (8) versehen ist, die insbesondere von einem oder mehreren Abschnitten (9) gebildet wird.

7. Gepäckablage (14) nach Anspruch 6, **dadurch gekennzeichnet, dass** die Strukturierung (8) von einem oder mehreren angerauten, insbesondere geschliffenen oder gesandstrahlten, und/oder beschichteten, insbesondere eine Lackschicht oder vorzugsweise transparente Folie aufweisenden, Abschnitten (9) gebildet wird.

8. Gepäckablage (14) nach Anspruch 6 oder 7, **dadurch gekennzeichnet, dass** die die Strukturierung (8) bildenden Abschnitte (9) nebeneinander in einer oder mehreren Reihen (10a,10b) angeordnet sind.

9. Gepäckablage (14) nach einem der Ansprüche 6 bis 8, **dadurch gekennzeichnet, dass** benachbarte Abschnitte (9) jeweils denselben Abstand voneinander haben.

10. Gepäckablage (14) nach einem der Ansprüche 6 bis 9, **dadurch gekennzeichnet, dass** die die Strukturierung (8) bildenden Abschnitte (9) dieselbe Größe und/oder Form haben.

11. Gepäckablage (14) nach einem der vorangehenden Ansprüche,
**dadurch gekennzeichnet, dass** die Scheibe (3) aus Glas, insbesondere Weißglas, vorzugsweise Sicherheitsglas, oder aus Kunststoff gebildet ist.

12. Gepäckablage (14) nach einem der vorangehenden Ansprüche, **dadurch gekennzeichnet, dass** die Scheibe (3) vier Stirnkanten (6,11,12,13) aufweist, von denen sich jeweils zwei Stirnkanten (6,12;11,13) gegenüberliegen.

13. Gepäckablage (14) nach einem der vorangehenden Ansprüche, **dadurch gekennzeichnet, dass** mindestens eine der Stirnkanten (6,11,12,13) zumindest teilweise poliert und/oder angeraut, vorzugsweise geschliffen oder gesandstrahlt, ist.

14. Gepäckablage (14) nach einem der vorangehenden Ansprüche, **dadurch gekennzeichnet, dass** mindestens eine der Stirnkanten (6,11,12,13), vorzugsweise mit einem Metallpartikel enthaltenden Material, beschichtet ist wobei die Beschichtung insbesondere eine lichtreflektierende Beschichtung oder eine Folie oder ein Lack ist.

15. Gepäckablage (14) nach einem der vorangehenden Ansprüche, **dadurch gekennzeichnet, dass** die Scheibe (3) von einem Träger (15) gehalten ist, der insbesondere einen die Scheibe (3) zumindest teilweise einfassenden Rahmen (16), der vorzugsweise zumindest teilweise die Stirnkanten (11,12,13) mit Ausnahme der ersten Stirnkante (6) verdeckt, aufweist.

## Claims

1. A luggage rack (14) comprising a lighting device (1) for illuminating the interior of vehicles, in particular passenger compartments, comprising
- a light source (2) which emits light and
- a plate (3) made of at least partially transparent material, said plate (3) having a top surface (4), a bottom surface (5) in parallel to the top surface (4), and at least a first end face (6),
**characterized in that** the light emitted from the light source (2) is introduced into the plate (3) through the first end face (6) and is emitted at least partially through the top surface (4) and/or the bottom surface (5) of the plate (3), and **in that** the plate (3) is a supporting element of the luggage rack (14), on which element pieces of luggage can be deposited.

2. The luggage rack (14) according to claim 1, **characterized in that** the light source (2) is directed directly towards the first end face (6).

3. The luggage rack (14) according to claim 1 or 2, **characterized in that** the light source (2) is in the form of a strip and arranged in parallel with the first end face (6).

4. The luggage rack (14) according to one of the preceding claims, **characterized in that** the light source (2) comprises one or multiple light emitting diodes (7) which are arranged in particular in a row along the first end face (6).

5. The luggage rack (14) according to one of the preceding claims, **characterized in that** the light source (2) is adapted for emitting colored light and/or light of different colors.

6. The luggage rack (14) according to one of the preceding claims, **characterized in that** the top and/or bottom surface (5) is at least partly provided with a patterning (8) which is formed in particular by one or multiple sections (9).

7. The luggage rack (14) according to claim 6, **characterized in that** the patterning (8) is formed by one or multiple sections (9) which are roughened, particularly ground or sandblasted, and/or coated, particularly comprising a coat of lacquer or preferably a transparent film.

8. The luggage rack according to claim 6 or 7, **characterized in that** the sections (9) forming the patterning (8) are arranged side-by-side in one or multiple rows (10a, 10b).

9. The luggage rack (14) according to one of claims 6 to 8, **characterized in that** adjacent sections (9) each are arranged at the same distance from one another.

10. The luggage rack (14) according to one of claims 6 to 9, **characterized in that** the sections (9) forming the patterning (8) have the same size and/or shape.

11. The luggage rack (14) according to one of the preceding claims, **characterized in that** the plate (3) is made of glass, in particular white glass, preferably security glass, or of plastics.

12. The luggage rack (14) according to one of the preceding claims, **characterized in that** the plate (3) comprises four end faces (6, 11, 12, 13), wherein each two of said end faces (6, 12; 11, 13) are arranged opposite to one another, respectively.

13. The luggage rack (14) according to one of the preceding claims, **characterized in that** at least one of the end faces (6, 11, 12, 13) is at least partly polished and/or roughened, preferably ground or sandblasted.

14. The luggage rack (14) according to one of the preceding claims, **characterized in that** at least one of the end faces (6, 11, 12, 13) is coated, preferably with a material containing metal particles, wherein the coating is particularly a light reflecting coating or a film or a lacquer.

15. The luggage rack (14) according to one of the preceding claims, **characterized in that** the plate (3) is held by a support (15) which particularly comprises a frame (16) enclosing the plate (3) at least partly, said frame preferably covering at least partly the end faces (11, 12, 13) with the exception of the first end face (6).

## Revendications

1. Compartiment à bagages (14) avec un dispositif d'éclairage (1) pour l'éclairage d'habitacles intérieurs de véhicule, en particulier des compartiments de passagers,
- avec une source lumineuse (2), qui émet de la lumière, et
- avec une vitre (3) en matériau au moins partiellement transparent, la vitre (3) présentant une surface supérieure (4), une surface inférieure (5) qui s'étend parallèlement à la surface supérieure (4), et au moins un premier bord frontal (6),
**caractérisé en ce que** la lumière émise par la source lumineuse (2) est introduite par le premier bord frontal (6) dans la vitre (3) et sort au moins partiellement par la surface supérieure (4) et/ou la surface inférieure (5) de la vitre (3), et **en ce que** la vitre (3) est une partie constituante porteuse du compartiment à bagages (14) sur lequel peuvent être déposés des bagages.

2. Compartiment à bagages (14) selon la revendication 1, **caractérisé en ce que** la source lumineuse (2) est dirigée directement sur le premier bord frontal (6).

3. Compartiment à bagages (14) selon la revendication 1 ou 2, **caractérisé que** la source lumineuse (2) présente une forme de bande et est disposée parallèlement au premier bord frontal (6).

4. Compartiment à bagages (14) selon l'une des revendications précédentes, **caractérisé en ce que** la source lumineuse (2) présente une ou plusieurs diodes lumineuses (7), qui sont disposées en particulier dans une rangée le long du premier bord frontal (6).

5. Compartiment à bagages (14) selon l'une des revendications précédentes, **caractérisé en ce que** la source lumineuse (2) est réalisée de sorte qu'elle émet de la lumière en couleur ou de la lumière en différentes couleurs.

6. Compartiment à bagages (14) selon l'une des revendications précédentes, **caractérisé en ce que** la surface supérieure et/ou inférieure (5) est munie au moins partiellement d'une structure (8) qui est formée par une ou plusieurs sections (9).

7. Compartiment à bagages (14) selon la revendication 6, **caractérisé en ce que** la structure (8) est formée par une ou plusieurs sections (9) rugosifiées, en particulier poncées ou sablées, et/ou revêtues, en particulier présentant une couche de vernis ou de préférence un film transparent.

8. Compartiment à bagages (14) selon la revendication 6 ou 7, **caractérisé en ce que** les sections (9) formant la structure (8) sont disposées les unes à côté des autres sur une ou plusieurs rangées (10a, 10b).

9. Compartiment à bagages (14) selon l'une des revendications 6 à 8, **caractérisé en ce que** des sections voisines (9) sont maintenues à distance égale les unes des autres.

10. Compartiment à bagages (14) selon l'une des revendications 6 à 9, **caractérisé en ce que** les sections (9) formant la structure (8) ont la même forme et/ou la même dimension.

11. Compartiment à bagages (14) selon l'une des revendications précédentes, **caractérisé en ce que** la vitre (3) se compose de verre, en particulier de verre blanc, de préférence de verre de sécurité, ou de matière plastique.

12. Compartiment à bagages (14) selon l'une des revendications précédentes, **caractérisé en ce que** la vitre (3) présente quatre bords frontaux (6, 11, 12, 13) dont deux bords frontaux (6, 12; 11, 13) sont respectivement opposés.

13. Compartiment à bagages (14) selon l'une des revendications précédentes, **caractérisé en ce qu'**au moins un des bords frontaux (6, 11, 12, 13) est au moins partiellement poli et/ou rugosifié, de préférence poncé ou sablé.

14. Compartiment à bagages (14) selon l'une des revendications précédentes, **caractérisé en ce que** qu'au moins un des bords frontaux (6, 11, 12, 13) est revêtu au moins partiellement d'un matériau contenant des particules métalliques, le revêtement étant en particulier un revêtement réfléchissant la lumière ou un film ou un vernis.

15. Compartiment à bagages (14) selon l'une des revendications précédentes, **caractérisé en ce que** la vitre (3) est maintenue par un support (15) qui présente un cadre (16) encadrant au moins partiellement la vitre (3), cadre qui recouvre au moins partiellement les bords frontaux (11, 12, 13) à l'exception du premier bord frontal (6).
